# EUROPÄISCHE PATENTSCHRIFT

(11) **EP 1 274 979 B1**
(45) Veröffentlichungstag und Bekanntmachung des Hinweises auf die Patenterteilung: **07.01.2004**
(21) Anmeldenummer: 01943262.4
(22) Anmeldetag: 19.04.2001
(51) Int. Cl.: G01M 17/08, B61L 23/04

(54) **VERFAHREN UND VORRICHTUNG ZUM ÜBERWACHEN DES FAHRVERHALTENS VON SCHIENENFAHRZEUGEN**
METHOD AND DEVICE FOR MONITORING THE TRAVELLING BEHAVIOR OF RAIL VEHICLES
PROCEDE ET DISPOSITIF PERMETTANT DE CONTROLER LE COMPORTEMENT DE ROULEMENT DE VEHICULES SUR RAILS

(30) Priorität: 19.04.2000 DE 10020521
(43) Veröffentlichungstag der Anmeldung: 15.01.2003
(73) Patentinhaber: DB Reise & Touristik AG, 60326 Frankfurt (DE)
(72) Erfinder: SÄGLITZ, Mario, 12163 Berlin (DE); SUNDER, Reinhold, 85778 Haimhausen (DE); KOLBASSEFF, Alexander, 83527 Haag-Rosenberg (DE); KIENINGER, Kurt, 81827 München (DE); ACKERMANN, Thomas, 85368 Wang (DE)
(74) Vertreter: Zinken-Sommer, Rainer
(86) Internationale Anmeldenummer: PCT/EP2001/004429
(87) Internationale Veröffentlichungsnummer: WO 2001/081888

(56) Entgegenhaltungen:
- WO-A-82/00805
- DE-A- 19 502 670
- DE-A- 19 826 115
- DE-A- 19 827 271
- DE-A- 19 836 081
- US-A- 3 994 459

## Beschreibung

Die Erfindung betrifft ein Verfahren und eine Vorrichtung zum Überwachen des Fahrverhaltens von Schienenfahrzeugen.

Aus der DE 198 37 476 A1 ist ein Verfahren der gattungsgemäßen Art bekannt. Dort wird vorgeschlagen, das Schall- und/oder Schwingungsverhalten während des bestimmungsgemäßen Einsatzes von Schienenfahrzeugen online zu erfassen und die erfassten Messergebnisse mit einem für eine jeweilige Fahrgeschwindigkeit geltenden Referenzwert zu vergleichen, wobei die Referenzwerte insbesondere fahrortbezogen zur Verfügung gestellt werden. Bei diesem bekannten Verfahren ist nachteilig, dass insbesondere beim Einsatz von sogenannten Hochgeschwindigkeitszügen durch den Einfluss der fahrortbezogenen Referenzwerte eine erhebliche Fehlerquelle gegeben ist. Das bekannte Verfahren ist hierdurch mit einer relativ hohen Ungenauigkeit behaftet, die insbesondere beim Einsatz in für die Personenförderung ausgelegten Hochgeschwindigkeitszügen ein nicht tolerierbares Restrisiko bürgt. Ferner können mittels des bekannten Verfahrens lediglich vorher frequenzklassifizierte Schäden erkannt werden. Überraschende, nicht klassifizierte Schäden können nicht erkannt werden.

Bekannt ist ein elektronisches Kontrollsystem für Radlager an Eisenbahnfahrzeugen, wobei ein fahrzeugautarkes Onboard-Überwachungssystem zur Detektion und Anzeige von Schäden verwendet wird (WO-A-8200805).

Das beschriebene System umfasst die an den Radsatzlagergehäusen oder deren näherer Umgebung installierten Beschleunigungssensoren, die Signalverarbeitungseinheit und die Anzeigeeinheit. Wesentliches Merkmal des Verfahrens ist, daß die Amplituden der Soll- Eigenfrequenzen "gemessen" und überwacht werden, wobei auf Schäden in o.g. Komponenten aufgrund von Frequenzverschiebungen der komponententypischen Eigenfrequenzen geschlossen wird, die sich in einer Verringerung der Amplituden der Soll- Eigenfrequenzen offenbaren.

Der Erfindung liegt die Aufgabe zugrunde, ein Verfahren und eine Vorrichtung der gattungsgemäßen Art zu schaffen, mittels denen in einfacher Weise eine hochgenaue Überwachung des Fahrverhaltens von Schienenfahrzeugen möglich ist.

Erfindungsgemäß wird diese Aufgabe durch ein Verfahren mit den im Anspruch 1 genannten Merkmalen gelöst. Dadurch, dass der einer Eigenschwingung wenigstens einer Fahrzeugkomponente zugeordnete Frequenzpeak während des bestimmungsgemäßen Einsatzes des Schienenfahrzeuges bezüglich wenigstens eines Kennwerts überwacht wird, kann in einfacher Weise ein hochgenaues Verfahren zur Verfügung gestellt werden, das insbesondere auch auf die zusätzliche Einbindung fahrortbezogener Komponenten beziehungsweise Parameter verzichtet. Hierdurch kann das erfindungsgemäße Verfahren schneller und genauer durchgeführt werden. Ferner können so vorteilhaft jegliche Schäden, also auch vorher nicht klassifizierte Schäden, detektiert werden.

Dem erfindungsgemäßen Verfahren liegt die Erkenntnis zugrunde, dass einzelne Fahrzeugkomponenten und gegebenenfalls miteinander gekoppelte Fahrzeugkomponenten auf Schwingungsanregungen, wie dies beim bestimmungsgemäßen Einsatz der Schienenfahrzeuge erfolgt, mit gekoppelten Eigenschwingungen definierter Frequenz, Amplitude und Dämpfung reagieren. Durch Vergleich der ermittelten Ist-Eigenschwingung mit der erwarteten und vorzugsweise als Referenzwert abgespeicherten Eigenschwingung lässt sich aufgrund von ermittelten Abweichungen auf ein verändertes Schwingungsverhalten der überwachten Fahrzeugkomponente schließen, so dass dieses veränderte Schwingungsverhalten in Bezug zu etwaigen Fehlerquellen gesetzt werden kann. Somit lässt sich eine Onboard-Diagnose von Schienenfahrzeugen realisieren.

In bevorzugter Ausgestaltung der Erfindung ist vorgesehen, dass ein Frequenz-, Amplituden- und/oder Dämpfungsparameter der Eigenschwingung überwacht wird. Durch eine derartige Ausgestaltung wird vorteilhaft erreicht, dass über der Zeit eine Änderung der Frequenz, Amplitude und/oder Dämpfung der jeweiligen Eigenschwingung überwacht werden kann und so in einfacher Weise eine Veränderung des Schwingungsverhaltens des gesamten Schienenfahrzeuges detektiert werden kann.

In weiterer bevorzugter Ausgestaltung der Erfindung ist vorgesehen, dass die Eigenschwingungen der wenigstens einen Fahrzeugkomponente geschwindigkeitsabhängig überwacht werden. Hierdurch kann in einfacher Weise auf unterschiedliche Anregungsfunktionen während unterschiedlicher Geschwindigkeiten des Schienenfahrzeuges Rücksicht genommen werden, so dass das Messergebnis eine hohe Genauigkeit aufweist. Hierdurch lassen sich geschwindigkeitsbedingte Amplitudenabweichungen und geschwindigkeitsbedingte Frequenzverschiebungen bei der Überwachung der Eigenschwingungen berücksichtigen.

In weiterer bevorzugter Ausgestaltung der Erfindung ist vorgesehen; dass die geschwindigkeitsabhängige Überwachung der Eigenschwingung in festlegbaren Geschwindigkeitsstufen erfolgt. Hierdurch kann der Überwachungsaufwand reduziert werden, da durch die Festlegung von Geschwindigkeitsstufen reale Geschwindigkeitsänderungen innerhalb einer Geschwindigkeitsstufe bei der Überwachung der Eigenschwingung unberücksichtigt bleiben können. Dieser bevorzugten Ausgestaltung der Erfindung liegt die Erkenntnis zugrunde, dass innerhalb bestimmter Geschwindigkeitsstufen eine geschwindigkeitsabhängige Amplitudenänderung oder Frequenzverschiebung der Eigenschwingung vernachlässigbar ist.

In weiterer bevorzugter Ausgestaltung der Erfindung ist vorgesehen, dass die Überwachung der Eigenschwingung fahrwegabhängig erfolgt. Hierdurch können die im reellen Fahrbetrieb der Schienenfahrzeuge auftretenden unterschiedlichen Anregungsfunktionen bei unterschiedlichen Fahrwegen, insbesondere bei Neubaustrecken, Altbaustrecken, Ausbaustrecken oder dergleichen, berücksichtigt werden. Entsprechend dem tatsächlichen Streckenzustand ergeben sich unterschiedliche Anregungsfunktionen für die zu überwachenden Fahrzeugkomponenten, so dass bei der Auswertung der Eigenschwingung die unterschiedlichen Anregungsfunktionen entsprechend der tatsächlich befahrenen Fahrwege in einfacher Weise berücksichtigt werden können. Hierdurch wird eine genaue Überwachung des Fahrverhaltens der Schienenfahrzeuge möglich.

Erfindungsgemäß wird die Aufgabe ferner durch eine Vorrichtung mit den im Anspruch 17 genannten Merkmalen gelöst. Dadurch, dass Auswertemittel vorhanden sind, welche wenigstens einen Kennwert des einer Eigenschwingung der Fahrzeugkomponente zugeordneten Frequenzpeaks überwachen, lässt sich in einfacher Weise eine Vorrichtung bereitstellen, mittels der eine genaue Schwingungsüberwachung zur Schadensfrüherkennung an Schienenfahrzeugen möglich ist.

Die Erfindung ermöglicht insbesondere eine zustandsbezogene Instandhaltung von Komponenten von Schienenfahrzeugen. Das Überwachungsverfahren kann insbesondere kontinuierlich während des Einsatzes der Schienenfahrzeuge durchgeführt werden. Das Verfahren lässt sich in einfacher Weise in eine Onboard-Diagnose des Schienenfahrzeuges integrieren.

Weitere bevorzugte Ausgestaltungen der Erfindung ergeben sich aus den übrigen, in den abhangigen Ansprüchen genannten Merkmalen.

Die Erfindung wird nachfolgend in Ausführungsbeispielen anhand der zugehörigen Zeichnungen näher erläutert. Es zeigen:
- Figur 1: eine schematische Ansicht eines Schienenfahrzeuges;
- Figur 2: eine schematische Perspektivansicht von Drehgestellen eines Schienenfahrzeuges und
- Figur 2a: schematisch ein Blockschaltbild einer Signalerfassungs- und Auswerteeinheit.

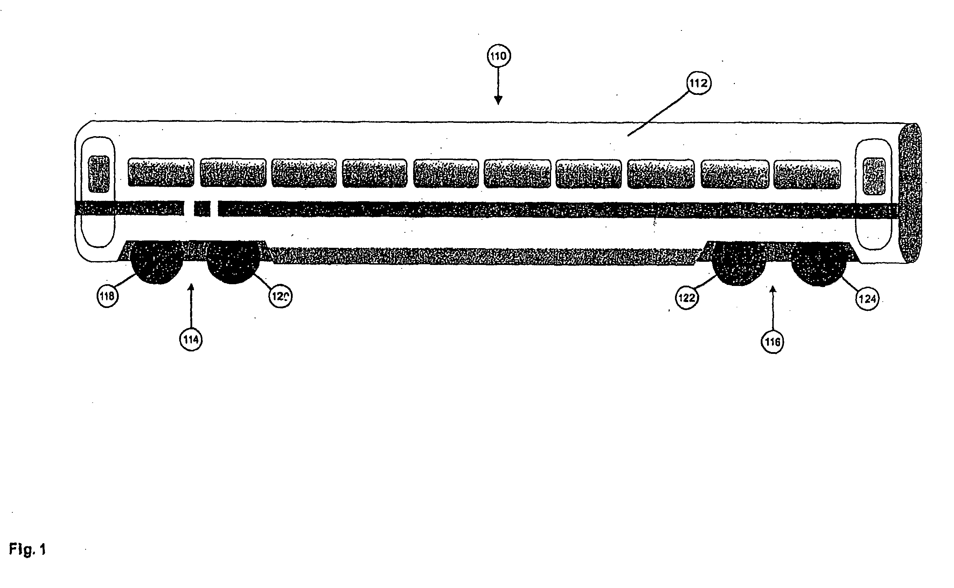

Figur 1 zeigt schematisch ein Schienenfahrzeug 110. Bei dem hier dargestellten Schienenfahrzeug 110 handelt es sich um einen Mittelwagen eines Hochgeschwindigkeitszuges. Die Erfindung wird lediglich beispielhaft anhand dieses Mittelwagens erläutert. Selbstverständlich lässt sich die Erfindung ohne Weiteres auf andere Schienenfahrzeuge, beispielsweise Triebfahrzeuge, Steuerwagen, Güterwagen oder dergleichen, übertragen.

Das Schienenfahrzeug 110 umfasst einen Wagenkasten 112, der auf zwei Laufdrehgestelle 114 und 116 gelagert ist. Die Laufdrehgestelle 114, 116 umfassen jeweils Radsätze 118, 120, 122 und 124. Der allgemeine Aufbau derartiger Schienenfahrzeuge 110, insbesondere die Ankopplung des Wagenkastens 112 an die Laufdrehgestelle 114 und 116 beziehungsweise die Lagerung der Radsätze 118, 120, 122 und 124 an den Laufdrehgestellen 114 und 116, sind allgemein bekannt, so dass hierauf im Einzelnen im Rahmen der vorliegenden Beschreibung nicht näher eingegangen werden soll.

Während des Einsatzes des Schienenfahrzeuges 110 rollen die Radsätze über einen Fahrweg. Je nach Fahrgeschwindigkeit und Zustand des Fahrweges erfährt das Schienenfahrzeug 110 eine Schwingungsanregung. Diese Schwingungsanregung führt zu einem Schwingungsverhalten einzelner Komponenten des Schienenfahrzeuges 110. Dies betrifft sowohl das Schwingungsverhalten einzelner Komponenten in Bezug auf einen festen Raumpunkt als auch das Schwingungsverhalten von wenigstens zwei Fahrzeugkomponenten relativ zueinander. Nach einem Einschwing-Zeitraum schwingen die Fahrzeugkomponenten mit definierten Eigenschwingungen. Amplitude und/oder Frequenz und/oder Dämpfung dieser Eigenschwingungen sind abhängig von der Schwingungsanregung. Diese wiederum ist abhängig von einer Geschwindigkeit und/oder einem Zustand des Fahrweges.

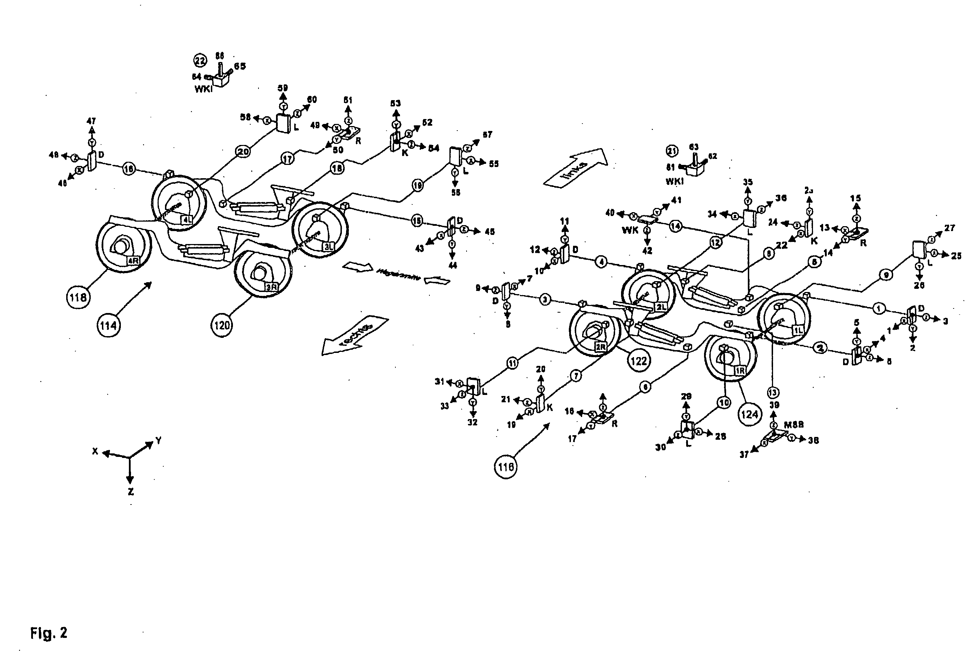

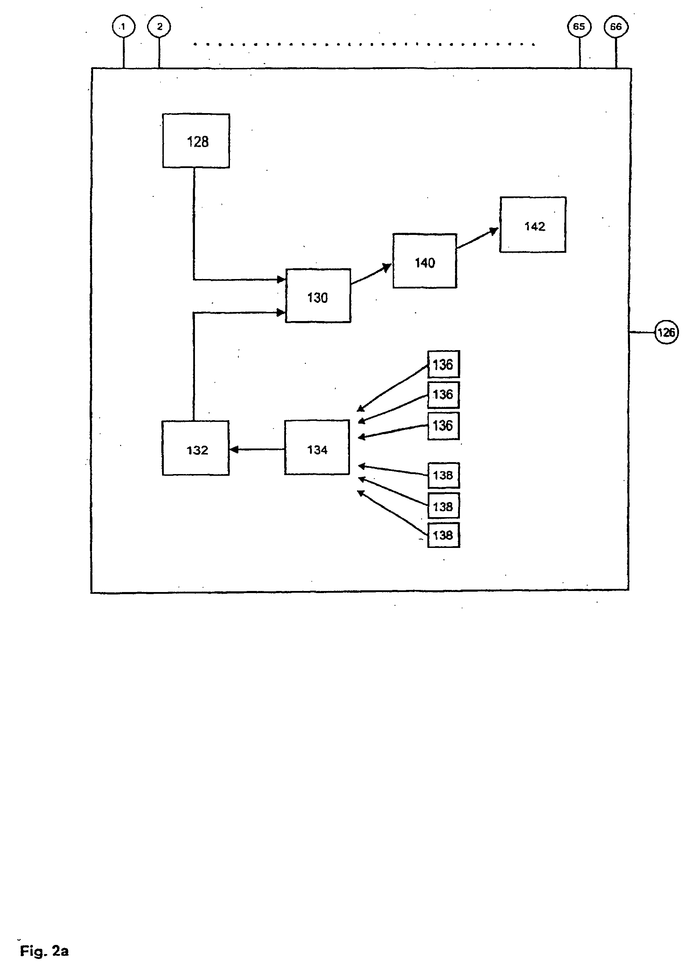

Figur 2 zeigt in einer schematischen Perspektivansicht die Laufdrehgestelle 114 und 116 des Schienenfahrzeuges 110.

Anhand der Darstellung wird deutlich, dass das Laufdrehgestell 116 die Räder 1R, 2R, 1L und 2L und das Laufdrehgestell 114 die Räder 3R, 4R, 3L und 4L umfasst, wobei R hierbei für rechts und L für links - in Fahrtrichtung gesehen - steht. Die Radsätze 118, 120, 122 und 124 sind jeweils über Achslager mit einem primären Feder/Dämpfersystem verbunden, das andererseits an einem Drehgestellrahmen angreift. Der Drehgestellrahmen ist über ein sekundäres Feder/Dämpfersystem mit dem Wagenkasten 112 verbunden. Gleichzeitig sind sogenannten Schlingerdämpferkonsolen am Wagenkasten angeordnet, die über Schlingerdämpfer mit dem Drehgestellrahmen verbunden sind.

In Figur 2 ist schematisch die Anordnung von Schwingungsaufnehmern am Schienenfahrzeug 110 gezeigt. Die hier gezeigte Auswahl von Befestigungspunkten ist lediglich beispielhaft. So kann die Anzahl der Schwingungsaufnehmer reduziert sein beziehungsweise es können auch andere Befestigungspunkte an gegebenenfalls anderen Fahrzeugkomponenten vorgesehen sein. Die Schwingungsaufnehmer sind als triaxiale Beschleunigungssensoren ausgebildet. Das heißt, mittels der Schwingungsaufnehmer können in den Raumrichtungen x, y und z auftretende Beschleunigungen erfasst werden. Diese Beschleunigungen in x-, y- und/oder z-Richtung sind direkt proportional zu dem Schwingverhalten des Schienenfahrzeuges 110.

Insgesamt sind mit D an den vier Klammerungsvorrichtungen des Drehgestells befestigte Schwingungsaufnehmer bezeichnet. Mit R sind an den unteren Sekundärdämpferbefestigungen des Drehgestellrahmens befestigte Schwingungsaufnehmer bezeichnet. Mit K sind an den Schlingerdämpferkonsolen befestigte Schwingungsaufnehmer bezeichnet, während mit L an den oberen Lagerschalen der Achslager befestigte Schwingungsaufnehmer bezeichnet sind. Mit MSB ist ein am Halterahmen einer Magnetschienenbremse angeordneter Schwingungsaufnehmer bezeichnet, mit WK ein außerhalb des Wagenkastens 112 in der Nähe eines Drehzapfens angeordneter Schwingungsaufnehmer und mit WKI ein im Innenraum des Wagenkastens 112 angeordneter Schwingungsaufnehmer. Die Schwingungsaufnehmer D bestimmen die Messpositionen 1 bis 4, die Schwingungsaufnehmer R die Messpositionen 5 und 6, die Schwingungsaufnehmer K die Messpositionen 7 und 8, die Schwingungsaufnehmer L die Messpositionen 9 bis 12, der Schwingungsaufnehmer MSB die Messposition 13, der Schwingungsaufnehmer WK die Messposition 14 und der Schwingungsaufnehmer WKI die Messposition 21.

Figur 2 zeigt mögliche Anordnungsvarianten, einerseits mit insgesamt fünfzehn Schwingungsaufnehmerpositionen am Laufdrehgestell 116, so dass insgesamt fünfundvierzig Beschleunigungssignale zur Verfügung stehen. Gemäß dem weiteren in Figur 2 gezeigten Ausführungsbeispiel sind am Laufdrehgestell 114 sieben Schwingungsaufnehmerpositionen angeordnet, so dass dort insgesamt einundzwanzig Beschleunigungssignale zur Verfügung stehen. Erhält beispielsweise ein Schienenfahrzeug 110 die in Figur 2 gezeigte Ausstattung mit Schwingungsaufnehmern, sind an insgesamt zweiundzwanzig Positionen Aufnehmer angeordnet, die insgesamt sechsundsechzig Beschleunigungssignale bereitstellen. Die möglichen Beschleunigungssignale sind mit den Zahlen 1 bis 66 durchnummeriert. Es ist jedoch jede andere Anzahl von Schwingungsaufnehmern möglich. Insbesondere wird zur Kostenminimierung bei realem Einsatz die Anzahl der Schwingungsaufnehmer zu reduzieren sein.

Figur 2a zeigt schematisch in einem Blockschaltbild eine Signalerfassungs- und Auswerteeinheit 126. Diese Signalerfassungs- und Auswerteeinheit 126 ist entweder in einem Schienenfahrzeug 110 angeordnet oder bei einem Zugverband von mehreren Schienenfahrzeugen 110 wenigstens einem der Schienenfahrzeuge, beispielsweise einem Triebfahrzeug, zugeordnet. Bei einer Mehrzahl von Schienenfahrzeugen 110 innerhalb eines Zuges und nur einer Signalerfassungs- und Auswerteeinheit 126 stehen ein entsprechendes Vielfaches an Eingangssignalen zur Verfügung. Anhand des erläuterten Ausführungsbeispieles sind Signaleingänge 1 bis 66 vorhanden. Die Übertragung der Signale kann leitungsgebunden, beispielsweise über ein BUS-System, oder leitungslos erfolgen. Bei einer leitungslosen Übertragung wird vorteilhaft möglich, die Signale neben der zug- oder schienenfahrzeuggebundenen Signalerfassungs- und Auswerteeinheit 126 gleichzeitig einer übergeordneten Leitstelle zu übertragen.

Die Signalerfassungs- und Auswerteeinheit 126 umfasst eine Frequenzanalyseeinheit 128, mittels der die von den Schwingungsaufnehmern gelieferten Signale einer Frequenzanalyse unterzogen werden können. Dies kann beispielsweise in Form einer Fast-Fourrier-Transformation (FFT) erfolgen, so dass ein Frequenzspektrum des aktuellen Schwingungsverhaltens der einzelnen Fahrzeugkomponenten zur Verfügung steht. Diese Frequenzsignale werden einem Vergleicher 130 zugeführt, der die Ist-Signale mit in einem Speichermittel 132 abgelegten Referenzsignalen vergleicht. In dem Speichermittel 132 sind zuvor messtechnisch ermittelte, zu erwartende Eigenschwingungskennwerte der einzelnen Fahrzeugkomponenten abgelegt. Eigenschwingungskennwerte werden für charakteristische Peaks in den Frequenzspektren ermittelt. Diese Peaks erlauben die Beurteilung des Zustands- und Störungsverhaltens einer Fahrzeugkomponente. Peakkennwerte sind der Frequenzwert und die Amplitude des Peakmaximums und die Peakform als Kriterium für das Dämpfungsverhalten. Deshalb ist das Speichermittel 132 so strukturiert, dass für jede Fahrzeugkomponente geschwindigkeitsabhängige und/oder fahrwegabhängige Eigenschwingungskennwerte abgelegt sind. Über ein hier angedeutetes Aktivierungsmittel 134 wird dem Speichermittel 132 mitgeteilt, welche momentane Geschwindigkeitsparameter und/oder Fahrwegparameter zu beachten sind. Entsprechend der Geschwindigkeit und/oder dem Fahrweg ergibt sich eine unterschiedliche Anregungsfunktion für das Schienenfahrzeug 110, so dass unterschiedliche Eigenschwingungskennwerte, insbesondere hinsichtlich Amplitude und/oder Frequenz und/oder Dämpfung, an der gleichen Fahrzeugkomponente beziehungsweise an der gleichen Kombination von Fahrzeugkomponenten zu erwarten sind. Die Geschwindigkeit wird hierbei in Geschwindigkeitsstufen unterteilt.

Figur 2a zeigt schematisch drei Geschwindigkeitsstufen, die beispielsweise bei einer Ist-Geschwindigkeit von 0 bis 100 km/h, einer Geschwindigkeitsstufe von 100 bis 200 km/h und einer Geschwindigkeitsstufe > 200 km/h ansprechen. Selbstverständlich ist möglich, die Anzahl der Geschwindigkeitsstufen anders festzulegen. Beispielsweise kann eine feinere Unterteilung in kleinere Geschwindigkeitsstufen oder auch eine gröbere Unterteilung in weniger Geschwindigkeitsstufen erfolgen. Charakteristisch für die Festlegung der Geschwindigkeitsstufen ist, dass bei allen Ist-Geschwindigkeiten innerhalb einer Geschwindigkeitsstufe, beispielsweise zwischen 100 und 200 km/h, ein im Wesentlichen vergleichbares Anregungsverhalten für das Schienenfahrzeug 110 gegeben ist.

Die Auswahl der Geschwindigkeitsstufe 136 kann beispielsweise durch eine Messung der Ist-Geschwindigkeit des Schienenfahrzeuges 110 erfolgen.

Die fahrwegabhängige Aktivierung des Speichermittels 132 kann beispielsweise über hier angedeutete Fahrwegstufen 138 erfolgen. Hierbei ist beispielsweise eine Fahrwegstufe einer Neubaustrecke, eine Fahrwegstufe einer Altbaustrecke, eine Fahrwegstufe einer Ausbaustrecke zugeordnet. Je nach Zustand des Fahrweges ergeben sich wiederum unterschiedliche Anregungszustände für das Schienenfahrzeug.

Anhand der schematischen Darstellung wird deutlich, dass über die geschwindigkeitsabhängige und/oder fahrwegabhängige Aktivierung des Speichermittels 132 eine variable und genaue Vorgabe des wenigstens einen Referenzwertes für einen Eigenschwingungskennwert wenigstens einer der Fahrzeugkomponenten möglich ist.

Der Vergleicher 130 vergleicht nunmehr die für die wenigstens eine ausgewählte Fahrzeugkomponente erwartete Eigenschwingung mit dem von der Frequenzanalyse 128 gelieferten Signal. Zeigt die der Eigenschwingung zugeordnete Spektrallinie beziehungsweise ein um diese Spektrallinie liegender Bereich Abweichungen in der Amplitude und/oder Frequenz und/oder Dämpfung zu dem erwarteten Referenzkennwert, wird über ein Diagnosemittel 140 auf ein abweichendes Schwingungsverhalten des Schienenfahrzeuges 110 geschlussfolgert. Je nach Grad der Abweichung, beispielsweise Über- oder Unterschreiten vorgebbarer Grenzwerte, erfolgt eine Registrierung der Abweichung oder eine Sofortreaktion, beispielsweise ein Auslösen eines Bremsvorganges des Schienenfahrzeuges 110.

Durch Aufzeichnen der gemessenen Signalmuster und/oder Kennwerte und/oder der Vergleiche lässt sich neben der Ist-Überwachung des Fahrverhaltens des Schienenfahrzeuges eine statistische Auswertung über der Zeit durchführen. Ein Speichermittel 142, beispielsweise ein beschreibbarer Datenträger, wie Magnetband, Compactdisc, Festplatte oder dergleichen, kann zur Aufzeichnung der Signalmuster und/oder Kennwerte beziehungsweise Auswertung in der Erfassungs- und Auswerteeinheit 126 integriert sein.

Die im Speichermittel 142 abgespeicherten Daten lassen sich so beispielsweise fortlaufend für ein Schienenfahrzeug 110 und gegebenenfalls für von dem Schienenfahrzeug 110 regelmäßig befahrene Fahrwege analysieren, so dass über eine Langzeitstudie Veränderungen von Amplitude und/oder Frequenz und/oder Dämpfung der Frequenzpeaks im Bereich der erwarteten Eigenschwingungen zur Erstellung von Wartungsdiagnosen, Schadensfrüherkennungsdiagnosen oder dergleichen zur Verfügung stehen.

Anhand der vorstehenden Erläuterung wird deutlich, dass für jede beliebige Fahrzeugkomponente in den drei Raumrichtungen x-Richtung, y-Richtung, z-Richtung eine Eigenschwingung ermittelbar ist und jede zugehörige Eigenfrequenz während des bestimmungsgemäßen Einsatzes der Schienenfahrzeuges 110 mit der gemessenen Ist-Frequenz vergleichbar ist. Auf diese Weise ist eine umfassende und genaue Überwachung des Fahrverhaltens der Schienenfahrzeuge insbesondere zur Früherkennung von Schäden durchführbar. Selbstverständlich kann zur Optimierung vorgesehen sein, dass die Anzahl der Schwingungsaufnehmer pro Laufdrehgestell reduziert ist und eine Analyse gegebenenfalls nur in ausgewählten Raumrichtungen erfolgt.

## Patentansprüche

1. Verfahren zum Überwachen des Fahrverhaltens von Schienenfahrzeugen, wobei ein Schwingungsverhalten wenigstens einer Fahrzeugkomponente überwacht wird, indem wenigstens ein Schwingungssignal erfasst, einer Fourier-Transformation unterworfen und mit wenigstens einem Referenzwert verglichen wird, **dadurch gekennzeichnet, dass** der einer Eigenschwindung der wenigstens einen Fahrzeugkomponente zugeordnete Frequenzpeak bezüglich wenigstens eines Kennwerts überwacht wird.

2. Verfahren nach Anspruch 1, **dadurch gekennzeichnet, dass** ein Amplitudenkennwert des Frequenzpeaks überwacht wird.

3. Verfahren nach einem der vorhergehenden Ansprüche, **dadurch gekennzeichnet, dass** ein Frequenzkennwert des Frequenzpeaks überwacht wird.

4. Verfahren nach einem der vorhergehenden Ansprüche, **dadurch gekennzeichnet, dass** ein Dämpfungskennwert des Frequenzpeaks überwacht wird.

5. Verfahren nach einem der vorhergehenden Ansprüche, **dadurch gekennzeichnet, dass** die Kennwerte der Frequenzpeaks geschwindigkeitsabhängig überwacht werden.

6. Verfahren nach Anspruch 5, **dadurch gekennzeichnet, dass** die geschwindigkeitsabhängige Überwachung in festlegbaren Geschwindigkeitsstufen erfolgt.

7. Verfahren nach einem der vorhergehenden Ansprüche, **dadurch gekennzeichnet, dass** die Kennwerte der Frequenzpeaks fahrwegabhängig überwacht werden.

8. Verfahren nach Anspruch 7, **dadurch gekennzeichnet, dass** die fahrwegabhängige Überwachung in festlegbaren Fahrwegstufen erfolgt.

9. Verfahren nach einem der vorhergehenden Ansprüche, **dadurch gekennzeichnet, dass** die Eigenschwingung in wenigstens einer Raumrichtung überwacht wird.

10. Verfahren nach einem der vorhergehenden Ansprüche, **dadurch gekennzeichnet, dass** das Schwingungsverhalten einer einzelnen Fahrzeugkomponente in Bezug auf einen festen Raumpunkt überwacht wird.

11. Verfahren nach einem der vorhergehenden Ansprüche, **dadurch gekennzeichnet, dass** das Schwingungsverhalten von wenigstens zwei Fahrzeugkomponenten relativ zueinander überwacht wird.

12. Verfahren nach einem der vorhergehenden Ansprüche, **dadurch gekennzeichnet, dass** bei Abweichen der ermittelten Kennwerte von den Referenzkennwerten Warn-, Störungs- oder Alarmsignale gebildet werden.

13. Verfahren nach einem der vorhergehenden Ansprüche, **dadurch gekennzeichnet, dass** bei Abweichen der gemessenen Kennwerte über einen tolerierbaren Bereich hinaus eine Abbremsung des Schienenfahrzeuges ausgelöst wird.

14. Verfahren nach einem der vorhergehenden Ansprüche, **dadurch gekennzeichnet, dass** die erfassten Schwingungsmuster und die davon ermittelten peakspezifischen Kennwerte aufgezeichnet und statistisch ausgewertet werden.

15. Verfahren nach einem der vorhergehenden Ansprüche, **dadurch gekennzeichnet, dass** das Verfahren kontinuierlich während des bestimmungsgemäßen Einsatzes des Schienenfahrzeuges durchgeführt wird.

16. Verfahren nach einem der vorhergehenden Ansprüche, **dadurch gekennzeichnet, dass** das Verfahren als Onboard-Überwachung/Diagnose durchgeführt wird.

17. Vorrichtung zum Überwachen des Fahrverhaltens von Schienenfahrzeugen (110), mit wenigstens einem, an wenigstens einer Fahrzeugkomponente angeordneten Schwingungsaufnehmer (1 bis 22) und einer Frequenzanalyseeinheit (128) zur Fourier-Transformation der von dem wenigstens einen Schwingungsaufnehmer (1 bis 22) gelieferten Signale, **dadurch gekennzeichnet, dass** Auswertemittel (130) vorhanden sind, welche wenigstens einen Kennwert des einer Eigenschwingung der Fahrzeugkomponente zugeordneten Frequenzpeaks mit dem erwarteten Referenzkennwert vergleichen.

18. Vorrichtung nach Anspruch 17, **dadurch gekennzeichnet, dass** die Fahrzeugkomponente ein Radlager ist.

19. Vorrichtung nach einem der vorhergehenden Ansprüche, **dadurch gekennzeichnet, dass** die Fahrzeugkomponente ein Drehgestell (114, 116) ist.

20. Vorrichtung nach einem der vorhergehenden Ansprüche, **dadurch gekennzeichnet, dass** die Fahrzeugkomponente ein Wagenkasten (112) ist.

21. Vorrichtung nach einem der vorhergehenden Ansprüche, **dadurch gekennzeichnet, dass** die Fahrzeugkomponente eine Schlingerdämpferkonsole ist.

22. Vorrichtung nach einem der vorhergehenden Ansprüche, **dadurch gekennzeichnet, dass** die Fahrzeugkomponente eine Magnetschienenbremse ist.

23. Vorrichtung nach einem der vorhergehenden Ansprüche, **dadurch gekennzeichnet, dass** der Schwingungsaufnehmer (1 bis 22) ein triaxialer Beschleunigungssensor ist.

24. Vorrichtung nach einem der vorhergehenden Ansprüche, **dadurch gekennzeichnet, dass** die Schwingungsaufnehmer (1 bis 22) mit wenigstens einer Signalerfassungs- und Auswerteeinheit (126) verbunden sind.

25. Vorrichtung nach einem der vorhergehenden Ansprüche, **dadurch gekennzeichnet, dass** die Signalerfassungs- und Auswerteeinheit (126) im Schienenfahrzeug (110) angeordnet ist.

26. Vorrichtung nach einem der vorhergehenden Ansprüche, **dadurch gekennzeichnet, dass** die Signalerfassungs- und Auswerteeinheit (126) für mehrere Schienenfahrzeuge (110) eines Zuges in einem Triebfahrzeug des Zuges angeordnet ist.

27. Vorrichtung nach einem der vorhergehenden Ansprüche, **dadurch gekennzeichnet, dass** die Signalerfassungs- und Auswerteeinheit (126) für mehrere Schienenfahrzeuge, insbesondere für mehrere Züge, in einer übergeordneten Leitzentrale angeordnet ist.

28. Vorrichtung nach einem der vorhergehenden Ansprüche, **dadurch gekennzeichnet, dass** eine Verbindung zwischen dem wenigstens einen Schwingungsaufnehmer (1 bis 22) und der Signalerfassungs- und Auswerteeinheit (126) leitungsgebunden ist.

29. Vorrichtung nach einem der vorhergehenden Ansprüche, **dadurch gekennzeichnet, dass** eine Verbindung zwischen dem wenigstens einen Schwingungsaufnehmer (1 bis 22) und der Signalerfassungs- und Auswerteeinheit (126) leitungslos ist.

## Claims

1. A method for monitoring the vibrational behavior of rail vehicles, wherein the vibrational behavior of at least one vehicle component is monitored by acquiring at least one vibration signal that is subjected to a Fourier transformation and compared with at least one reference value, **characterized in that** the frequency peak assigned to a natural vibration of the at least one vehicle component is monitored with respect to at least one characteristic value.

2. The method according to Claim 1, **characterized in that** a characteristic amplitude value of the frequency peak is monitored.

3. The method according to one of the preceding claims, **characterized in that** a characteristic frequency value of the frequency peak is monitored.

4. The method according to one of the preceding claims, **characterized in that** a characteristic attenuation value of the frequency peak is monitored.

5. The method according to one of the preceding claims, **characterized in that** the characteristic values of the frequency peak are monitored in dependence on the speed.

6. The method according to Claim 5, **characterized in that** the speed-dependent monitoring takes place in defined speed stages.

7. The method according to one of the preceding claims, **characterized in that** the characteristic values of the frequency peak are monitored in dependence on the track.

8. The method according to Claim 7, **characterized in that** the track-dependent monitoring takes place in defined track stages.

9. The method according to one of the preceding claims, **characterized in that** the natural vibration is monitored in at least one direction in space.

10. The method according to one of the preceding claims, **characterized in that** the vibrational behavior of an individual vehicle component relative to a fixed point in space is monitored.

11. The method according to one of the preceding claims, **characterized in that** the vibrational behavior of at least two vehicle components relative to one another is monitored.

12. The method according to one of the preceding claims, **characterized in that** warning, defect or alarm signals are generated if the determined characteristic values deviate from the reference values.

13. The method according to one of the preceding claims, **characterized in that** the brakes of the rail vehicle are actuated if the deviation of the measured characteristic values exceeds a tolerance range.

14. The method according to one of the preceding claims, **characterized in that** the measured vibration patterns and the peak-specific characteristic values determined from these vibration patterns are recorded and statistically evaluated.

15. The method according to one of the preceding claims, **characterized in that** the method is carried out continuously during the conventional utilization of the rail vehicle.

16. The method according to one of the preceding claims, **characterized in that** the method is carried out in the form of an on-board monitoring process/diagnosis.

17. A device for monitoring the vibrational behavior of rail vehicles (110), with at least one vibration sensor (1-22) that is arranged on at least one vehicle component and a frequency analyzer (128) for the Fourier transformation of the signals delivered by the at least one vibration sensor (1-22), **characterized in that** evaluation means (130) are provided which compare at least one characteristic value of the frequency peak assigned to a natural vibration of the vehicle component with the expected reference value.

18. The device according to Claim 17, **characterized in that** the vehicle component is a wheel bearing.

19. The device according to one of the preceding claims, **characterized in that** the vehicle component is a bogie (114, 116).

20. The device according to one of the preceding claims, **characterized in that** the vehicle component is a vehicle box body (112).

21. The device according to one of the preceding claims, **characterized in that** the vehicle component is an antirolling device console.

22. The device according to one of the preceding claims, **characterized in that** the vehicle component is an electromagnetic rail brake.

23. The device according to one of the preceding claims, **characterized in that** the vibration sensor (1-22) is realized in the form of a triaxial acceleration sensor.

24. The device according to one of the preceding claims, **characterized in that** the vibration sensors (1-22) are connected to at least one signal acquisition and evaluation unit (126).

25. The device according to one of the preceding claims, **characterized in that** the signal acquisition and evaluation unit (126) is arranged in the rail vehicle (110).

26. The device according to one of the preceding claims, **characterized in that** the signal acquisition and evaluation unit (126) for several rail vehicles (110) of a train is arranged in a traction vehicle.

27. The device according to one of the preceding claims, **characterized in that** the signal acquisition and evaluation unit (126) for several rail vehicles, in particular for several trains, is arranged in a control center of higher order.

28. The device according to one of the preceding claims, **characterized in that** a connection between the at least one vibration sensor (1-22) and the signal acquisition and evaluation unit (126) is realized in a wire-bound fashion.

29. The device according to one of the preceding claims, **characterized in that** a connection between the at least one vibration sensor (1-22) and the signal acquisition and evaluation unit (126) is realized in a wireless fashion.

## Revendications

1. Procédé de surveillance du comportement en déplacement de véhicules ferroviaires, un comportement oscillatoire d'au moins une composante d'un véhicule étant surveillé en détectant au moins un signal d'oscillation, en le soumettant à une transformation de Fourier et en le comparant avec au moins une valeur de référence, **caractérisé en ce que** le pic de fréquence associé à l'au moins une composante du véhicule est surveillé au niveau d'au moins une valeur caractéristique.

2. Procédé selon la revendication 1, **caractérisé en ce qu'**une valeur caractéristique d'amplitude du pic de fréquence est surveillée.

3. Procédé selon l'une quelconque des revendications précédentes, **caractérisé en ce qu'**une valeur caractéristique de fréquence du pic de fréquence est surveillée.

4. Procédé selon l'une quelconque des revendications précédentes, **caractérisé en ce qu'**une valeur caractéristique d'amortissement du pic de fréquence est surveillée.

5. Procédé selon l'une quelconque des revendications précédentes, **caractérisé en ce que** les valeurs caractéristiques des pics de fréquence sont surveillées en fonction de la vitesse.

6. Procédé selon la revendication 5, **caractérisé en ce que** la surveillance en fonction de la vitesse se fait dans des niveaux de vitesse déterminables.

7. Procédé selon l'une quelconque des revendications précédentes, **caractérisé en ce que** les valeurs caractéristiques des pics de fréquence sont surveillées en fonction de la voie.

8. Procédé selon la revendication 7, **caractérisé en ce que** la surveillance en fonction de la voie se fait dans des niveaux de voie déterminables.

9. Procédé selon l'une quelconque des revendications précédentes, **caractérisé en ce que** l'oscillation propre est surveillée dans au moins une direction spatiale.

10. Procédé selon l'une quelconque des revendications précédentes, **caractérisé en ce que** le comportement oscillatoire d'une composante individuelle du véhicule est surveillé en référence à un point spatial fixe.

11. Procédé selon l'une quelconque des revendications précédentes, **caractérisé en ce que** le comportement oscillatoire d'au moins deux composantes du véhicule l'une par rapport à l'autre est surveillé.

12. Procédé selon l'une quelconque des revendications précédentes, **caractérisé en ce qu'**en cas d'écart des valeurs caractéristiques déterminées par rapport aux valeurs de référence, des signaux d'avertissement, d'anomalie ou d'alarme sont formés.

13. Procédé selon l'une quelconque des revendications précédentes, **caractérisé en ce qu'**en cas d'écart des valeurs caractéristiques mesurées au delà d'une plage tolérable, un freinage du véhicule ferroviaire se déclenche.

14. Procédé selon l'une quelconque des revendications précédentes, **caractérisé en ce que** les échantillons d'oscillations détectés et les valeurs caractéristiques spécifiques aux pics calculées à partir de ceux-ci sont enregistrées et exploitées statistiquement.

15. Procédé selon l'une quelconque des revendications précédentes, **caractérisé en ce que** le procédé est réalisé en continu pendant l'usage conforme à sa destination du véhicule ferroviaire.

16. Procédé selon l'une quelconque des revendications précédentes, **caractérisé en ce que** le procédé est réalisé sous forme de surveillance/diagnostic de bord.

17. Dispositif de surveillance du comportement en déplacement de véhicules ferroviaires (110), comportant au moins un amortisseur (1 à 22) disposé sur au moins une composante du véhicule et une unité d'analyse de fréquence (128) pour la transformation de Fourier des signaux fournis par l'au moins un amortisseur (1 à 22), **caractérisé en ce qu'**il est prévu des moyens d'exploitation (130) qui comparent au moins une valeur caractéristique des pics de fréquence associés à une oscillation propre des composantes du véhicule avec la valeur caractéristique de référence attendue.

18. Dispositif selon la revendication 17, **caractérisé en ce que** la composante du véhicule est un roulement de roue.

19. Dispositif selon l'une quelconque des revendications précédentes, **caractérisé en ce que** la composante du véhicule est un bogie (114, 116).

20. Dispositif selon l'une quelconque des revendications précédentes, **caractérisé en ce que** la composante du véhicule est une caisse de wagon (112).

21. Dispositif selon l'une quelconque des revendications précédentes, **caractérisé en ce que** la composante du véhicule est une console de stabilisation anti-roulis.

22. Dispositif selon l'une quelconque des revendications précédentes, **caractérisé en ce que** la composante du véhicule est un frein de voie électromagnétique.

23. Dispositif selon l'une quelconque des revendications précédentes, **caractérisé en ce que** l'amortisseur (1 à 22) est un capteur d'accélération triaxial.

24. Dispositif selon l'une quelconque des revendications précédentes, **caractérisé en ce que** les amortisseurs (1 à 22) sont reliés à au moins une unité de détection et d'exploitation de signaux (126).

25. Dispositif selon l'une quelconque des revendications précédentes, **caractérisé en ce que** l'unité de détection et d'exploitation de signaux (126) est disposée dans le véhicule ferroviaire (110).

26. Dispositif selon l'une quelconque des revendications précédentes, **caractérisé en ce que** l'unité de détection et d'exploitation de signaux (126) de plusieurs véhicules ferroviaires (110) d'un train est disposée dans un véhicule moteur du train.

27. Dispositif selon l'une quelconque des revendications précédentes, **caractérisé en ce que** l'unité de détection et d'exploitation de signaux (126) de plusieurs véhicules ferroviaires, notamment de plusieurs trains, est disposée dans une centrale directrice préposée.

28. Dispositif selon l'une quelconque des revendications précédentes, **caractérisé en ce qu'**une liaison entre l'au moins un amortisseur (1 à 22) et l'unité de détection et d'exploitation de signaux (126) se fait par fil.

29. Dispositif selon l'une quelconque des revendications précédentes, **caractérisé en ce qu'**une liaison entre l'au moins un amortisseur (1 à 22) et l'unité de détection et d'exploitation de signaux (126) se fait sans fil.
